# EUROPÄISCHE PATENTANMELDUNG

(11) **EP 2 774 714 A1**
(43) Veröffentlichungstag der Anmeldung: **10.09.2014**
(21) Anmeldenummer: 13157914.6
(22) Anmeldetag: 06.03.2013
(51) Int. Cl.: B23K 26/14, B23K 26/34, C23C 4/12, B23P 6/00

(54) **Laserauftragsschweißen mit geringem Energieeintrag im Substrat**

(71) Anmelder: Siemens Aktiengesellschaft, 80333 München (DE)
(72) Erfinder: Bostanjoglo, Georg, 14163 Berlin (DE); Burbaum, Bernd, 14612 Falkensee (DE)

(57) **Zusammenfassung**

Durch das Aufschmelzen des Schweißmaterials vor dem Auftreffen auf eine Oberfläche (19) des Substrats (4) wird die Energieeinbringung in das Substrat klein gehalten.

## Beschreibung

Die Erfindung betrifft das Laserauftragsschweißen, bei dem ein geringer Energieeintrag in das Substrat erfolgt.

Es sind Laserauftragsschweißverfahren bekannt, bei dem der Laserstrahl auf das Substrat auftrifft und dort das zugeführte Schweißmaterial aufschmilzt.

Ein generelles Problem beim Auftragsschweißen, nicht nur beim Laserauftragschweißen, stellt die Entstehung von Rissen dar, den so genannten Heißrissen.

Solche Risse sind nicht erwünscht und zu vermeiden.

Es ist daher Aufgabe der Erfindung das Problem der Heißrisse zu vermeiden.

Die Aufgabe wird gelöst durch eine Düse gemäß Anspruch 1 und ein Verfahren gemäß Anspruch 4.

In den Unteransprüchen sind jeweils weitere vorteilhafte Maßnahmen aufgelistet, die beliebig miteinander kombiniert werden können, um weitere Vorteile zu erzielen.

Durch die Düse und das Verfahren können vorteilhafterweise Heißrisse vermieden werden.

Es zeigen:

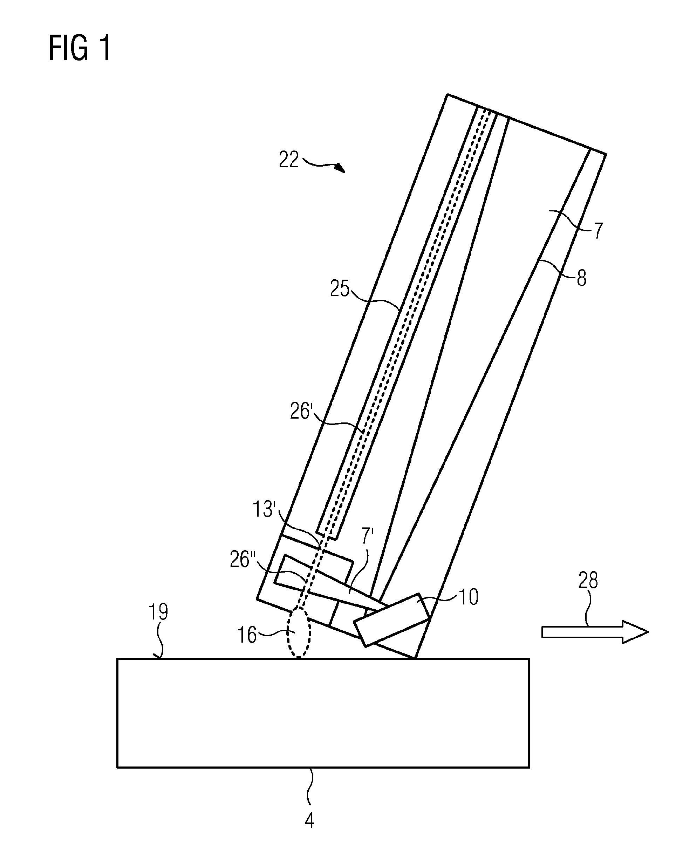

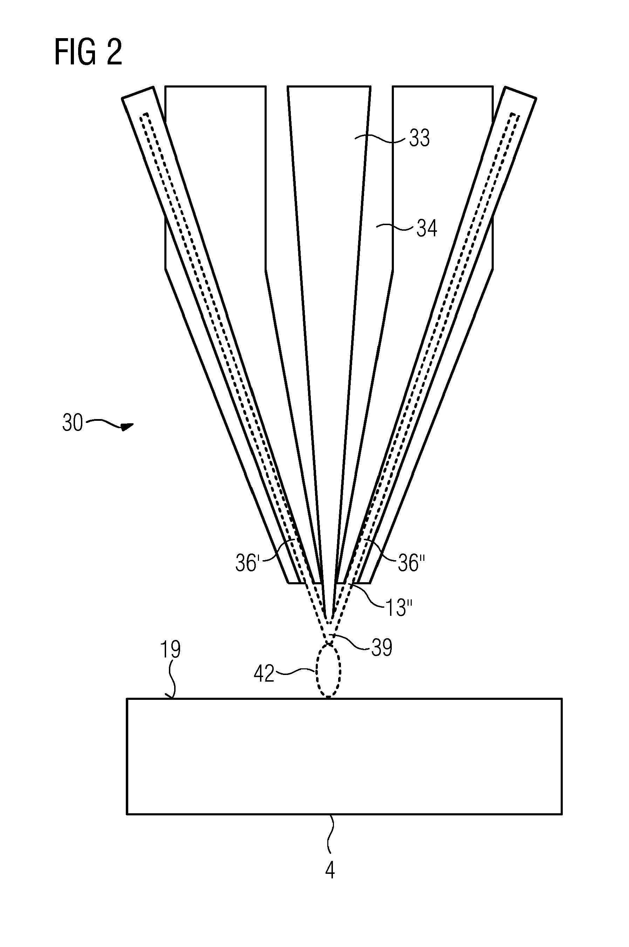

- Figuren 1, 2: schematisch eine Anordnung der erfindungsgemäßen Vorrichtung zur Erläuterung des erfindungsgemäßen Verfahrens;

Die Figuren und die Beschreibung stellen nur Ausführungsbeispiele der Erfindung dar.

In der Figur 1 ist eine erfindungsgemäße Düse 22 dargestellt. Es soll ein Substrat 4 mit einer äußeren Oberfläche 19 mit der Düse 22 auftragsgeschweißt werden.
Das Substrat 4 ist in einer nicht näher dargestellten Halterung gehalten und/oder in einer entsprechenden Schutzvorrichtung angeordnet.

Die Düse 22 weist eine Pulverzufuhr 25 für ein Pulver 26' auf, das an einer Öffnung 13' am Ende der Düse 22 austritt, wobei durch einen Laserstrahl 7, 7' in einer Laserstrahlführung 8 in oder an der Düse 22 das pulverförmige Schweißmaterial 26" vor dem Auftreffen auf die Oberfläche 19 des Substrats 4 aufgeschmolzen wird, so dass eine Schmelze 16 des Pulvers aus der Pulverzufuhr 25 vor dem Auftreffen auf die Oberfläche 19 des Substrats erzeugt wird.

Die Düse 22 kann einen ersten Laserstrahl 7 führen, der längs oder parallel zur Pulverzufuhr 25 geführt wird und hier vorzugsweise am Ende der Düse 22 durch einen Umlenkspiegel 10 in Richtung des austretenden Pulverstrahls einen umgelenkten Laserstrahl 7' erzeugt, der auf ein Teil 26" des Pulvers trifft oder treffen kann.
Der Umlenkwinkel für den Laserstrahl 7 beträgt vorzugsweise 60° bis 120°, ganz vorzugsweise um 90°.

Vorzugsweise gibt es nur eine einzige Pulverzufuhr 25 und/oder vorzugsweise nur eine einzige Laserstrahlführung 8.

Das Pulver 26" wird also oberhalb der Oberfläche 19 des Substrats 4 durch einen gepulsten oder CW-Laserstrahl 7' aufgeschmolzen, so dass der Wärmeeintrag in den das Substrat 4 nur über das flüssige Metall 16 des Pulvers 26" stattfindet.

Die Düse 22 ist vorzugsweise in Verfahrrichtung 28 gekippt und vorzugsweise so, dass die Pulverzufuhr 25 bzw. die Austrittsöffnung 13 von der Oberfläche 19 weggekippt wird. Durch die entsprechende Anordnung der Laserstrahlung 7', hier durch die Umlenkung fällt auch keine Laserstrahlung 7' auf das Substrat 4 auf.
Durch die Stellung der Düse 22 und der dort angeordneten Optik und der Pulverzufuhr 25, vorzugsweise unter einem Winkel von 15° bis 20° unter der Vorgabe der Verfahrrichtung 28 zum Substrat 19, führt liegen gebliebenes Pulver nicht zur Anbindungsfehler während des Schweißprozesses.

Figur 2 zeigt eine weitere erfindungsgemäße Düse 30. Ein Laserstrahl 33 in einer Laserstrahlführung 34 wird in einer Düse 30 nicht umgelenkt, sondern verläuft, vorzugsweise zentral, innerhalb der Düse 30.
Vorzugsweise wird nur ein Laserstrahl 33 verwendet.

Das Pulver wird über eine ringförmige Pulverzufuhr oder Pulverzufuhren 36', 36" vorzugsweise konzentrisch um den Strahl 33 herum so zusammengeführt, dass sich ein Pulverstrahl oder die Pulverstrahlen in einem Punkt 39 außerhalb der Düse 30 trifft oder treffen.

Auf diesen Pulverpunkt 39 ist auch der austretende Laserstrahl 33 ausgerichtet, so dass das Pulver in diesem Punkt aufschmilzt und als Schmelztropfen 42 auf die Oberfläche 19 des Substrats 4 trifft.
Die Pulverzufuhr 36', 36" ist also vorzugsweise konisch ausgebildet oder angeordnet.

Durch diese Vorgehensweise und/oder Verwendung der Düsen 22, 30 kann über die Laserleistung ein Abstand des Schmelzbereichs zur Oberfläche gezielt eingestellt werden und der Energieeintrag in die Schmelze und damit das Abtropfverhalten der Schmelze auf die Oberfläche 19 beeinflusst werden.

## Patentansprüche

1. Düse (22, 30)
zum Laserauftragsschweißen,
die aufweist:
eine Pulverzufuhr (25, 36', 36") für Pulver (26', 39), bei der Pulver (26", 39) an einem Ende aus einer Öffnung (13', 13") austritt,
eine Laserstrahlführung für einen Laserstrahl (7, 7', 33), der das Pulver (26', 39) nach dem Austritt aus der Öffnung (13', 13") aufschmilzt,
insbesondere ohne auf die Oberfläche (19) des auftragszuschweißenden Substrats (4) zu treffen.

2. Düse (22) nach Anspruch 1,
bei dem der Laserstrahl (7) in der Düse (22) mit seiner Mittelachse längs,
insbesondere parallel,
zur Pulverzufuhr (25),
führbar ist und
durch einen Umlenkspiegel (10) auf ein Pulver (26"),
das aus der Öffnung (13') aus der Pulverzufuhr (25) austreten kann,
als umgelenkter Laserstrahl (7') auftreffen kann.

3. Düse (30) nach Anspruch 1,
bei der der Laserstrahl (33) in der Düse (30) nicht umgelenkt wird,
von einer Pulverzufuhr (36', 36"),
insbesondere konzentrisch,
ganz insbesondere konisch,
umgeben ist,
und der Laserstrahl (33) auf ein Pulver (39) aus der Pulverzufuhr (36', 36") trifft,
das (39) an einem Punkt außerhalb der Düse (30) zusammentrifft.

4. Verfahren zum Laserauftragsschweißen,
insbesondere mit einer Düse (22, 30) nach einem oder mehreren der Ansprüche 1 bis 3
bei dem ein Pulver (26", 39) als Schweißmaterial vor dem Auftreffen auf eine Oberfläche (19) eines Substrats (4) aufgeschmolzen wird.

5. Verfahren nach Anspruch 4,
bei dem ein Laserstrahl (7', 33) zur Aufschmelzung des Pulvers (26, 39) nicht auf die Oberfläche (19) des Substrats (4) auftrifft.

6. Verfahren nach einem der beiden Ansprüche 4 oder 5,
bei dem durch Einstellung der Optik und Verfahrrichtung (28) liegen gebliebenes Pulver nicht zu einem Bindungsfehler während eines Schweißprozesses führt.

7. Verfahren nach einem oder mehreren der Ansprüche 4 bis 6,
bei dem die Düse (22, 31) in Verfahrrichtung (28) verkippt wird.
